# EUROPEAN PATENT SPECIFICATION

(11) **EP 0 676 417 B1**
(45) Date of publication and mention of the grant of the patent: **28.06.2000**
(21) Application number: 95302260.5
(22) Date of filing: 04.04.1995
(51) Int. Cl.: C08B 31/12, B01D 61/44

(54) **Process for the preparation of cationisation reagent**
Verfahren zur Herstellung eines Kationisierungsreagens
Procédé de préparation d'un réactif de cationisation

(30) Priority: 07.04.1994 GB 9406859
(43) Date of publication of application: 11.10.1995
(73) Proprietor: CERESTAR HOLDING BV, NL-4550 AA Sas Van Gent (NL)
(72) Inventor: Fitton, Michael Georges, B-1060 Bruxelles (BE); Bux, Walter Josephina Leo, B-2180 Ekeren (BE)
(74) Representative: Wilkinson, Stephen John

(56) References cited:
- EP-A- 0 051 337
- EP-A- 0 277 633
- EP-A- 0 466 577
- WO-A-90/06382
- WO-A-92/11079
- GB-A- 2 131 049

## Description

The present invention relates to a process for the preparation of a cationisation reagent suitable for use in the preparation of cationic starch.

The cationisation of starch is well known and well established process in which starch is reacted under alkaline conditions with for example, the chlorhydrin 3-chloro-2-(hydroxypropyl)trialkyl ammonium chloride or its epoxide equivalent. "Alkyl" in this reagent is suitably methyl, ethyl or propyl. Because the epoxide is highly reactive and unstable on storage, the reagent is usually used in the chlorhydrin form which, under alkaline conditions, is quickly converted to the reactive epoxy form before addition to the starch. A small excess of alkali functions as the starch cationisation catalyst. The conversion of the chlorhydrin to the epoxide generates chloride ions in addition to those already introduced by the chloride form of the reagent. The use of the reagent therefore inevitably introduces chloride ions into the product of the process and in practice it is not practicable to remove all the chloride from the cationised starch product. Moreover, the presence of the chloride ions in the reagent or in the cationisation process may lead to corrosion of plant materials and could be a precursor for the formation of organic chlorine compounds which are increasingly regarded as a health risk. One of the main uses of cationised starches is in paper coating and paper sizing and paper manufacturers are concerned with the presence of chloride and chlorine compounds in their products and press for the provision where possible of products containing a minimum of chlorine or chloride.

GB-A-2131049 describes an electrolytic process, and an electrolytic cell for use in the process, for removing halide ions from organic halide salts. According to the process described the halide ions are replaced by hydroxide ions to form the free base of the compound in question or the organic halide is converted to an electrically-neutral inner salt.

EP-A-0051337 describes a process of reducing the corrosive nature of chloride-containing starch cationisation agents by replacing the chloride ions with sulphate ions using anion exchange chromatography.

The present invention aims to supply a method of meeting the concerns of users of cationised starch by providing a cationisation reagent with a reduced chloride content so that less chloride is introduced during the cationisation process. Such a reagent is provided, according to the present invention by treating the presently commercially available chloride-containing cationisation reagents by electrodialysis so as to replace ionic chloride by a more acceptable ion. An example of such an acceptable ion is sulphate.

The present invention provides a process for the production of a cationisation reagent characterised by the metathesis by electrodialysis of a cationisation reagent containing chloride ions in aqueous solution, and a source of replacement anions being acceptable anions other than chloride, wherein the cationisation reagent is a tertiary or quaternary ammonium chloride which is substituted by a halo-alkyl or halo-alkenyl group or by an epoxyalkyl or epoxyalkenyl group or by the chlorhydrin equivalent of such epoxy groups and wherein, during the electrodialysis of the cationisation agent, chloride ions originally present in the aqueous solution containing chloride ions and tertiary or quaternary ammonium ions are caused to pass through a first anion-permeable membrane thereby becoming separated from the tertiary or quaternary ammonium ions and wherein replacement anions are caused to pass through a second anion-permeable membrane thereby becoming introduced into the aqueous solution containing the tertiary or quaternary ammonium ions, the pore size of the first anion-permeable membrane being such as to prevent passage therethrough of the replacement anions.

Electrodialysis is a process in which by application of a direct electric current between an anode and a cathode ionic species are caused to pass through cation- and anion-permeable membranes respectively located between the two electrodes. By suitable arrangement of the membranes ionic species may be separated and/or exchanged. In operation, the membranes are spaced apart in layers so as to define individual compartments, the minimum number of compartments required for a given separation forming a cell. In practice, an electrodialysis unit will consist of a number of cells e.g., 3 to several thousand, particularly 3 to 500.

The ion-permeable membranes are usually made of a synthetic organic matrix provided with pores in which are located charged atoms or groups. In a cation-permeable membrane the charged atoms or groups are anionic in nature, the reverse applying in an anion-permeable membrane. Under the driving force of the direct current, ionic species in the compartments between the electrodes are attracted to one electrode or the other depending upon their charge. On reaching the cation-permeable membrane cations are attracted by the anionic atoms or groups in the pores and move from one atom or group to the other so passing through the pores. An analogous operation takes place at the anion-permeable membrane with respect to anions. By suitable choice of the membrane type a differentiation may also be made between ions of the same species depending upon ion size. Thus, for example, it is possible to define membranes which will permit the passage of Cl⁻ ions but not SO₄²⁻ ions.

The cationisation reagent is a tertiary or quaternary ammonium chloride which is substituted by the halo-alkyl or halo-alkenyl group e.g., chlorobutenyl, or by an epoxyalkyl or epoxyalkenyl group or by the chlorhydrin equivalents of such epoxy groups. The cationisation reagent may also contain one or more substituents selected from alkyl groups containing 1 to 22 carbon atoms, hydroxyalkyl groups, cycloakyl groups, aralkyl or alkaryl groups. The alkyl groups containing 1 to 22 carbon atoms may be lower alkyl groups e.g., containing 1 to 6 carbon atoms such as methyl, ethyl or propyl groups, or higher alkyl groups e.g., groups containing 7 to 22 carbon atoms such as lauryl, myristyl and stearyl groups.

The process of the invention may be applied in particular to either the chlorhydrin, 3-chloro-2-(hydroxy-propyl)trialkylammonium chloride, or to its epoxy equivalent, 2,3-epoxypropyl-trialkylammonium chloride and as the latter is the active form of the cationisation reagent and as it is free of organic chlorine it is the generally preferred reagent. In view of the instability of the epoxy form however the 2,3-epoxypropyltrialkylammonium chloride is suitably prepared from the corresponding chlorhydrin immediately prior to the process of the invention by reacting the chlorhydrin with an alkali such as sodium hydroxide in the stoichiometric amount required to convert the chlorhydrin to the epoxide. The "alkyl" groups in the reagents used in the process suitably contain 1 to 22 carbon atoms and are preferably lower alkyl e.g., methyl, ethyl or propyl. More preferably, the alkyl groups are methyl or two may be lower alkyl such as methyl and the third higher alkyl e.g., lauryl.

The anions other than chloride ions which are used in the process are suitably those generally regarded as physiologically acceptable and which do not have any adverse or disadvantageous properties in the cationisation process e.g., by being coloured themselves or by discolouring the cationisation reagent or the cationised starch. Preferred anions are sulphate, sulphite, iodide, citrate, nitrate, nitrite, phosphate, p-tosylate, bromide, thiosulphate, acetate, adipate, formate, gluconate, propionate, borate and sulphamate. Of these, sulphate is most preferred. The source of the acceptable ion may be the acid e.g., sulphuric acid but is preferably a water soluble salt e.g., an alkali metal or ammonium salt, particularly the sodium salt.

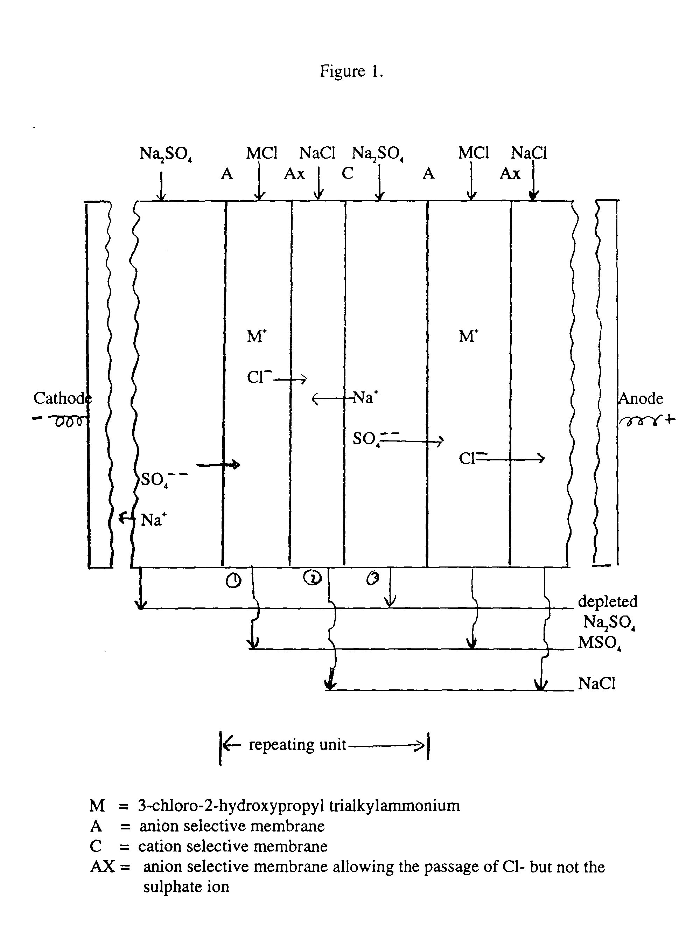

The process according to the invention is carried out in an electrodialysis apparatus as described above provided with an anode and a cathode separated by one or more cells. Each cell suitably comprises three compartments in sequence each compartment being defined by an anion-permeable membrane and a cation-permeable membrane respectively, a cation-permeable membrane being adjacent to the cathode and an anion-permeable membrane adjacent to the anode. A typical construction of such an apparatus is shown in the drawing attached to this specification which shows one cell of a multi-cell stack. Each cell comprises three compartments indicated at **1** to **3** in the drawing, each compartment being fed continuously with an aqueous solution as shown, aqueous solutions being simultaneously and continuously removed from each compartment. The cathode and anode compartments of the stack are continuously irrigated with a dilute salt solution to prevent accumulation of ions.

Compartment **1** is fed with an aqueous solution of the chloride salt of, for example, the quaternary ammonium form of the epoxy or chlorhydrin reagent which, under the conditions applying ionises into chloride and the respective quaternary ammonium ions. The ammonium ions being too large to pass through the cation-permeable membrane remain in the compartment while the chloride ions pass into compartment **2**. At the same time, sulphate ions enter compartment **1** from the sodium sulphate solution located in the adjacent compartment equivalent to compartment **3**. Sulphate ions entering compartment **1** cannot pass through the anion-permeable membrane AX with the chloride ions into cell **2** because of the preselected pore size of the membrane. The sodium ions in compartment **3** transfer to compartment **2** to form a solution of sodium chloride which is the product of the process together with the desired sulphate form of the quaternary ammonium salt.

The sulphate form of the ammonium salt leaving compartment **1** as an aqueous solution is suitable for immediate use in a cationisation process. The aqueous sodium chloride leaving compartment **2** is suitably recycled, preferably continuously, with a bleed-off being taken and replaced by water to remove sodium chloride from the process. The solution leaving compartment **3** is depleted in sodium sulphate and sodium sulphate is suitably added before recycling the solution, preferably continuously, to the process. It is possible to recycle part or all of the aqueous solution from compartment **1** in order to increase the replacement of chloride by sulphate but it is preferred that such a recycle is kept to a minimum in order to minimise the conversion of the chlorhydrin or epoxide to the undesired glycol. Although the unit described in this and preceding paragraphs is described as using sodium sulphate it should be understood that this is for convenience only and that other acceptable anions could equally as well be used. Similarly, the sulphate ions are described as being introduced to the process as the sodium salt but the acid or other water soluble salts could also be employed.

The concentration of the aqueous solution of chlorhydrin or epoxide used in the process is preferably in the range 50 to 70% by weight, particularly 60 to 70% by weight. The process is suitably carried out in ambient temperature or at a temperature slightly elevated to prevent any crystallisation of the chlorhydrin or epoxide when highly concentrated solutions are used.

The cationisation reagent obtained by the process of the present invention is characterised in that at least 80% more preferably at least 90% of the chloride ion has been replaced by another acceptable ion. Preferably the chloride ions are replaced by sulphate. The cationisation reagent obtained by the process of the present invention is suitably used for preparing cationic starches.

The invention will now be further described and illustrated by reference to the following Examples.

### Example

The electrodialysis unit was a pilot unit with cell design as described above. There were five cells in the unit which was the type TS-2-5-D-P supplied by EURODIA of 1, boulevard Hippolyte Marquès, F 94200 Ivry-sur-Seine. The current applied to the electrodes was 9 amps at 18 volts. The reagent used was a 65% wt/wt solution of 3-chloro-2-(hydroxy-propyl)trimethylammonium chloride and the exchange ion was sulphate provided as a sodium sulphate solution (100 grams/litre). The changes in concentration of the sodium chloride and sodium sulphate solutions were monitored by electroconductivity measurements. The increase in the sulphate associated with the 3-chloro-2-(hydroxypropyl)trimethylammonium ion and the decrease in chloride were measured by ion-chromatography. The chlorhydrin solution was recycled through the unit until a steady state was achieved which represents a 92% replacement of ionic chloride by sulphate.

In a similar experiment the chlorhydrin was first converted to the epoxide form by treatment with the stoichiometric amount of alkali and the epoxide immediately fed to the electrodialysis unit. In this case the replacement of chloride by sulphate was 97% and, when the ensuing product was used to cationised starch, the cationised starch product contained less than 200 ppm chloride (as compared to 5000 ppm in a starch cationised with the conventional chloride containing cationisation reagent). The reactivity of the cationic reagent was unaffected by changing the chloride ion to sulphate.

## Claims

1. A process for the production of a cationisation reagent characterised by the metathesis by electrodialysis of a cationisation reagent containing chloride ions in aqueous solution, and a source of replacement anions being acceptable anions other than chloride, wherein the cationisation reagent is a tertiary or quaternary ammonium chloride which is substituted by a halo-alkyl or halo-alkenyl group or by an epoxyalkyl or epoxyalkenyl group or by the chlorhydrin equivalent of such epoxy groups and wherein, during the electrodialysis of the cationisation agent, chloride ions originally present in the aqueous solution containing chloride ions and tertiary or quaternary ammonium ions are caused to pass through a first anion-permeable membrane thereby becoming separated from the tertiary or quaternary ammonium ions and wherein replacement anions are caused to pass through a second anion-permeable membrane thereby becoming introduced into the aqueous solution containing the tertiary or quaternary ammonium ions, the pore size of the first anion-permeable membrane being such as to prevent passage therethrough of the replacement anions.

2. A process according to claim 1, characterised in that the cationisation reagent is substituted by one or more substitutents selected from alkyl groups containing 1 to 22 carbon atoms, hydroxyalkyl groups, cycloalkyl groups, aralkyl or alkaryl groups.

3. A process according to claim 2, characterised in that the cationisation reagent is 3-chloro-2-(hydroxypropyl) trialkylammonium chloride or its epoxide equivalent 2,3-epoxypropyltrialkylammonium chloride.

4. A process according to claim 3, characterised in that the alkyl groups of the trialkylammonium chlorides are lower alkyl groups e.g., methyl, ethyl or propyl groups or two of the alkyl groups are lower alkyl groups such as methyl groups and the third is a higher alkyl group e.g., a lauryl group.

5. A process according to any one of the preceding claims, characterised in that the replacement anion is sulphate.

6. A process according to any one of the preceding claims characterised in that the replacement anion is provided as an acid or as an alkali metal or ammonium salt, preferably as a sodium salt.

7. A process according to any one of the preceding claims, wherein at least 80% of the chloride is replaced by the replacement anion.

## Patentansprüche

1. Verfahren zur Herstellung eines Kationisierungsreagenz, gekennzeichnet durch die Metathese durch Elektrodialyse eines in wäßriger Lösung Chloridionen enthaltenden Kationisierungsreagenz und einer Quelle von Austauschanionen, die verträgliche, von Chlorid verschiedene Anionen darstellen, wobei das Kationisierungsreagenz ein tertiäres oder quaternäres Ammoniumchlorid ist, das mit einer Halogenalkyl- oder Halogenalkenylgruppe oder mit einer Epoxyalkyl- oder Epoxyalkenylgruppe oder mit dem Chlorhydrinäquivalent solcher Epoxygruppen substituiert ist und wobei während der Elektrodialyse des Kationisierungsmittels ursprünglich in der wäßrigen, Chloridionen und tertiäre oder quaternäre Ammoniumionen enthaltenden Lösung vorliegende Chloridionen durch eine erste Anionen-permeable Membran treten, wodurch sie von den tertiären oder quaternären Ammoniumionen getrennt werden und wobei die Austauschanionen durch eine zweite Anionen-permeable Membran treten, wodurch sie in die die tertiären oder quaternären Ammoniumionen enthaltende wäßrige Lösung gelangen, wobei die Porengröße der ersten Anionen-permeablen Membran derart ausgelegt ist, daß der Durchgang der Austauschionen dort hindurch verhindert wird.

2. Verfahren nach Anspruch 1, dadurch gekennzeichnet, daß das Kationisierungsreagenz mit einem oder mehreren Substituenten, ausgewählt aus Alkylgruppen, die 1 bis 22 Kohlenstoffatome enthalten, Hydroxyalkylgruppen, Cycloalkylgruppen, Aralkyl- oder Alkarylgruppen substituiert ist.

3. Verfahren nach Anspruch 2, dadurch gekennzeichnet, daß das Kationisierungsreagenz 3-Chlor-2-(hydroxypropyl)trialkylammoniumchlorid oder dessen Epoxidäquivalent 2,3-Epoxypropyltrialkylammoniumchlorid ist.

4. verfahren nach Anspruch 3, dadurch gekennzeichnet, daß die Alkylgruppen der Trialkylammoniumchloride Niederalkylgruppen, beispielsweise Methyl-, Ethyl- oder Propylgruppen, darstellen oder zwei der Alkylgruppen Niederalkylgruppen, wie Methylgruppen, darstellen und die dritte eine höhere Alkylgruppe, z.B. eine Laurylgruppe, darstellt.

5. Verfahren nach einem der vorangehenden Ansprüche, dadurch gekennzeichnet, daß das Austauschanion Sulfat ist.

6. Verfahren nach einem der vorangehenden Ansprüche, dadurch gekennzeichnet, daß das Austauschanion als eine Säure oder als ein Alkalimetall- oder Ammoniumsalz, vorzugsweise als ein Natriumsalz, bereitgestellt wird.

7. Verfahren nach einem der vorangehenden Ansprüche, wobei mindestens 80% des Chlorids durch das Austauschanion ersetzt werden.

## Revendications

1. Procédé de production d'un réactif de cationisation caractérisé par la décomposition double par électrodialyse d'un réactif de cationisation contenant des ions chlorure en solution aqueuse, et d'une source d'anions de remplacement qui sont des anions acceptables autres que du chlorure, dans lequel le réactif de cationisation est un chlorure d'ammonium tertiaire ou quaternaire qui est substitué par un groupe halo-alkyle ou halo-alkényle ou par un groupe époxyalkyle ou époxyalkényle ou par l'équivalent chlorhydrine de ces groupes époxy et dans lequel, pendant l'électrodialyse de l'agent de cationisation, des ions chlorure présents à l'origine dans la solution aqueuse contenant des ions chlorure et des ions ammonium tertiaires et quaternaires sont amenés à passer à travers une première perméable aux anions, de manière à se séparer des ions ammonium tertiaires et quaternaires, et dans lequel les anions de remplacement sont amenés à passer à travers une seconde membrane perméable aux anions de manière à s'introduire dans la solution aqueuse contenant les ions ammonium tertiaires et quaternaires, la dimension de pore de la première membrane perméable aux anions étant établie de manière à empêcher le passage à travers celle-ci des anions de remplacement.

2. Procédé selon la revendication 1, caractérisé en ce que le réactif de cationisation est substitué par un ou plusieurs substituants sélectionnés parmi des groupes alkyle contenant de 1 à 22 atomes de carbone, des groupes hydroxyalkyle, des groupes cycloalkyle, des groupes aralkyle ou alkaryle.

3. Procédé selon la revendication 2, caractérisé en ce que le réaction de cationisation est du chlorure de 3-chloro-2-(hydroxypropyl)trialkylammonium ou son équivalent époxyde, le chlorure de 2,3-époxy-propyltrialkylammonium.

4. Procédé selon la revendication 3, caractérisé en ce que les groupes alkyle des chlorures de trialkylammonium sont des groupes alkyle inférieurs, par exemple, des groupes méthyle, éthyle ou propyle ou deux des groupes alkyle sont des groupes alkyle inférieurs tels que des groupes méthyle et le troisième groupe est un groupe alkyle supérieur, par exemple un groupe lauryle.

5. Procédé selon l'une quelconque des revendications précédentes, caractérisé en ce que l'anion de remplacement est un sulfate.

6. Procédé selon l'une quelconque des revendications précédentes, caractérisé en ce que l'anion de remplacement est fourni en tant qu'acide ou en tant que sel d'ammonium ou de métal alcalin, de préférence sous forme de sel de sodium.

7. Procédé selon l'une quelconque des revendications précédentes, dans lequel on remplace au moins 80 % du chlorure par l'anion de remplacement.
